# EUROPEAN PATENT APPLICATION

(11) **EP 2 399 739 A1**
(43) Date of publication of application: **28.12.2011**
(21) Application number: 10743663.6
(22) Date of filing: 08.02.2010
(51) Int. Cl.: B32B 27/18, B32B 5/28

(54) **METHOD FOR PRODUCING RESIN-BASED COMPOSITE**

(30) Priority: 23.02.2009 JP 2009039686
(71) Applicant: Mitsubishi Heavy Industries, Ltd., Tokyo 108-8215 (JP)
(72) Inventor: KISHIDA, Tomone, Nagoya-shi Aichi 455-8515 (JP); OGURI, Kazuyuki, Nagoya-shi Aichi 455-8515 (JP)
(74) Representative: Henkel, Breuer & Partner
(86) International application number: PCT/JP2010/051830
(87) International publication number: WO 2010/095536

(57) **Abstract**

Provided is a method for producing, with good work performance, a composite comprising a lightning-resistant layer having excellent adhesion with a resin-based composite and good fatigue properties. The method for producing a resin-based composite comprises a step for forming a laminate by the successive lamination, on a first resin sheet (11) formed primarily from a fiber-reinforced resin, of a conductive layer (12) formed from a resin containing metal powder and a second resin sheet (13) formed primarily from a fiber-reinforced resin; and a step for baking the laminate and bonding the first resin sheet (11), conductive layer (12), and second resin sheet (13) to form a resin-based composite (10),

## Description

### {Technical Field}

The present invention relates to a method for producing a resin-based composite having conductivity.

### {Background Art}

Resin-based composites such as fiber-reinforced resins are lightweight and have high strength, and are therefore widely used as structural members for aircraft, automobiles and ships and the like. These types of resin-based composites comprise a resin of low conductivity as a matrix, and therefore when they are used, for example, for the main wing structure of an aircraft, conductivity must be imparted to the surface of the composite in order to provide lightning resistance. The method for imparting conductivity to the surface of the composite generally employs a technique in which a copper foil is laminated to the surface of the composite by thermally bonding the copper foil at the same time as the formation of the composite (for example, see PTL 1) .

### {Citation List}

### {Patent Literature}

{PTL 1} Japanese Unexamined Patent Application, Publication No. Hei 11-138669

### {Summary of Invention}

### {Technical Problem}

However, in the above method wherein a copper foil undergoes simultaneous thermal bonding and molding on the surface of the resin-based composite, because a resin and a copper foil with significantly different coefficients of thermal expansion are bonded together, a problem has arisen in that wrinkling tends to occur. Further, because thin copper foils suffer drawbacks including poor handling, susceptibility to folding, susceptibility to adhesion of contaminants and the generation of burrs upon performing cutting operations of the copper foil, and must be handled with meticulous care, the operation of bonding a copper foil to a resin-based composite has proven technically problematic. Further, another problem exists in that wrinkling and the adhesion of contaminants exert an adverse effect on the strength properties.

Furthermore, resin-based composites that use a copper foil as a lightning-resistant layer have also suffered from a problem of poor workability, and are prone to the generation of burrs upon cutting or perforation.

The present invention has been developed in light of these circumstances, and provides a method for producing, with good workability, a composite that exhibits excellent adhesion to a resin-based composite and has a lightning-resistant layer.

### {Solution to Problem}

In order to address the problems described above, the present invention provides a method for producing a resin-based composite, the method comprising a step of forming a laminate by sequentially laminating, on a first resin sheet comprising mainly a fiber-reinforced resin, a conductive layer formed from a resin containing a metal powder, and a second resin sheet comprising mainly a fiber-reinforced resin, and a step of forming a resin-based composite by baking the laminate to bond the first resin sheet, the conductive layer and the second resin sheet.

Further, the present invention provides a method for producing a resin-based composite, the method comprising a step of forming a laminate by laminating a conductive layer formed from a resin containing a metal powder to one surface of a first resin sheet comprising mainly a fiber-reinforced resin, and laminating a second resin sheet comprising mainly a fiber-reinforced resin to the surface on the opposite side to the surface on which the conductive layer is formed, and a step of forming a resin-based composite by baking the laminate to bond the first resin sheet, the conductive layer and the second resin sheet.

Because the above-mentioned conductive layer contains a resin as the main component, the difference in the coefficients of thermal expansion for the conductive layer and the fiber-reinforced resin sheets is small. As a result, the residual stress following bonding is reduced, and therefore a resin-based composite that exhibits excellent adhesion to a fiber-reinforced resin sheet and has a lightning-resistant layer can be obtained. Further, because the handling properties improve, the conductive layer can be formed across a broad surface area of the fiber-reinforced resin sheet surface.

In the present invention described above, if the metal powder is a copper powder or silver powder, then a conductive layer with good conductivity can be achieved, which is preferable.

### {Advantageous Effects of Invention}

According to the present invention, by using a conductive layer formed from a resin containing a metal powder, a resin-based composite that exhibits excellent adhesion to a fiber-reinforced resin sheet and has a lightning-resistant layer can be obtained. Further, because the handling properties improve, the conductive layer can be formed across a broad surface area of the fiber-reinforced resin sheet surface.

### {Brief Description of Drawings}

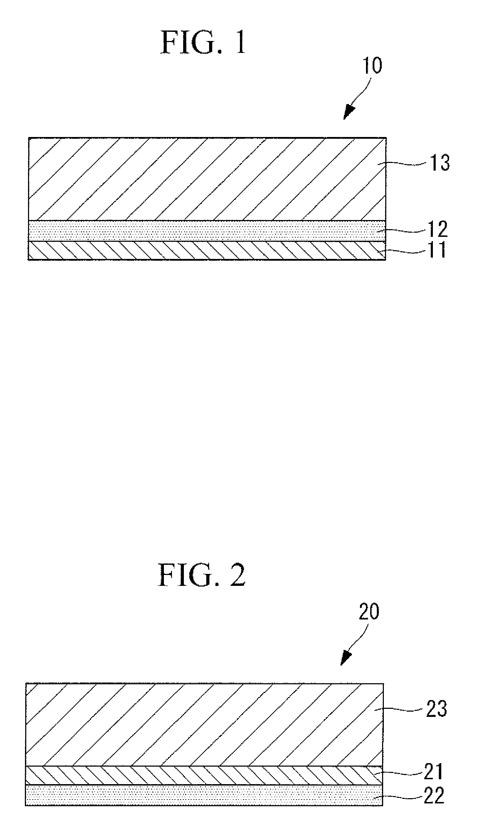

{Fig. 1} A cross-sectional schematic view of a resin-based composite produced using the production method of a first embodiment.
{Fig. 2} A cross-sectional schematic view of a resin-based composite produced using the production method of a third embodiment.

### {Description of Embodiments}

Embodiments of the present invention are described below.

### (First Embodiment)

Fig. 1 is a cross-sectional schematic view of a resin-based composite produced using the production method of a first embodiment. The resin-based composite 10 has a structure in which a first resin sheet 11, a conductive layer 12 that acts as a lightning-resistant layer, and a second resin sheet 13 are laminated in sequence. By forming a resin-based composite of a structure in which the conductive layer is sandwiched between the first and second resin sheets in this manner, the outermost surface can be made smooth. The case where a resin-based composite of the structure shown in Fig. 1 is used for the main wing structure of an aircraft is aerodynamically advantageous compared with a structure in which the lightning-resistant layer is provided on the outermost surface of the main wing structure.

The first resin sheet 11 is a sheet formed from a glass fiber reinforced plastic (GFRP) prepared by immobilizing glass fibers within an epoxy resin. The second resin sheet 13 is a sheet formed from a carbon fiber reinforced plastic (CFRP) prepared by immobilizing carbon fibers within an epoxy resin.

In the present embodiment, the conductive layer 12 is a conductive sheet formed from a resin containing a metal powder. The resin that constitutes the conductive sheet is, for example, a phenolic resin, epoxy resin, acrylic resin or urethane resin or the like. If a copper powder or silver powder is used as the metal powder, then good conductivity can be achieved.

The conductive sheet can be obtained, for example, by using a sprayer or applicator to apply a predetermined thickness of the resin containing the metal powder to a molding sheet, performing heating and drying in an open atmosphere to remove the solvent within the resin and harden the resin, and then detaching the resin from the molding sheet. If the molding sheet is a sheet in which, for example, the resin application surface has been coated with ethylene tetrafluoride, then the dried conductive sheet can be easily detached. The drying temperature is set to a temperature at which the resin being used undergoes hardening. For example, in the case of a phenolic resin, drying is performed within a temperature range from 130°C to 180°C. In the case of an epoxy resin, drying is performed within a temperature range from 60°C to 150°C.

The resin-based composite 10 is produced using the steps described below.
First, a conductive sheet that acts as the conductive layer 12 is positioned on a GFRP prepreg that functions as the first resin sheet 11. When a plurality of conductive sheets are positioned on the GFRP prepreg, the edges of adjacent conductive sheets are overlapped, for example across a width of approximately 5 mm. In the conductive sheet prepared by the above method of applying a resin containing a metal powder to a molding sheet and then performing drying, the metal powder within the resin tends to sink to the molding sheet-side of the sheet, whereas the outer surface of the applied resin oxidizes during drying, and therefore the resistance value at the outer surface is greater than the resistance value at the molding sheet-side surface. In this manner, by overlapping the edges of adjacent conductive sheets so that the molding sheet-side surfaces contact each other, increases in the resistance value at the contact surfaces can be prevented.

Next, a CFRP prepreg that functions as the second resin sheet 13 is positioned on the conductive sheet. The laminate prepared by laminating the GFRP prepreg, the conductive sheet and the CFRP prepreg is placed inside a vacuum bag. The laminate is then heated within a temperature range from 175°C to 185°C while the inside of the vacuum bag is evacuated, thereby bonding the prepregs and the conductive sheet to form the resin-based composite 10.

By using a conductive sheet (a resin containing a metal powder that has been molded into sheet form in advance) as in the present embodiment, corrosion of the resin sheet by solvents and the generation of a water component during thermal bonding can be prevented. The conductive sheet, which contains a resin as a main component, exhibits excellent handling properties such as superior flexibility and resistance to tearing compared with conventional copper foils. As a result, the workability during bonding can be improved significantly, and the conductive sheet can be bonded to the resin sheet across a large surface area, which is beneficial.
Further, in the resin-based composite of the present embodiment, because the conductive sheet that contains a metal powder-containing resin as the main component is used as a lightning-resistant layer, the difference in the coefficients of thermal expansion for the lightning-resistant layer and the first and second resin sheets is small. As a result, the adhesion between the lightning-resistant layer and the first and second resin sheets is good.

In those cases where a plurality of conductive sheets are used, and the edges of adjacent conductive sheets are overlapped, the adhesion between the overlapped portions of the conductive sheets is good. Consequently, increases in the resistance at the overlapped portions can be prevented.

Further, even when cutting processing or perforation processing is performed on the resin-based composite of the present embodiment, the type of burring of the lightning-resistant layer at the processed surface that is observed in conventional resin-based composites that use a copper foil as the lightning-resistant layer does not occur.

### (Second Embodiment)

In a second embodiment, the conductive layer is formed by applying a resin containing a metal powder to the first resin sheet. The resin and the metal powder employ the same materials as the first embodiment.

In the second embodiment, the resin-based composite 10 is produced using the steps described below.
First, the resin containing the metal powder is applied to a GFRP prepreg that functions as the first resin sheet 11. The application method may employ spray coating, or a resin paste may be applied using a coater. Following application, heating and drying is performed in an open atmosphere to remove the solvent within the resin and harden the resin, thus forming the conductive layer 12. The drying temperature is set to a temperature at which the resin being used undergoes hardening.

Next, a CFRP prepreg that functions as the second resin sheet 13 is positioned on the conductive layer 12. The laminate prepared by laminating the GFRP prepreg, the conductive layer and the CFRP prepreg is placed inside a vacuum bag. The laminate is then heated within a temperature range from 175°C to 185°C while the inside of the vacuum bag is evacuated, thereby bonding the prepregs and the conductive layer to form the resin-based composite 10.

In those cases where the metal powder-containing resin is applied directly to the FRP prepreg, if the amount of solvent contained within the resin is large, then the epoxy resin that constitutes the FRP prepreg may be corroded by the solvent. If the amount of solvent contained within the resin is small, then corrosion of the prepreg by the solvent can be prevented even when the metal powder-containing resin is applied directly to the FRP prepreg.

If the metal powder-containing resin is not dried following application, and a separate FRP prepreg is laminated and the resulting laminate then baked, then in the case of a phenolic resin for example, water is sometimes generated from the resin that represents the main component of the metal powder-containing resin- Consequently, the adhesion between the layer formed from the metal powder-containing resin and the resin sheet deteriorates, and the external appearance is also impaired, both of which are undesirable. Accordingly, it is preferable that following application of the metal powder-containing resin, drying is performed before the second resin sheet is laminated.

### (Third Embodiment)

Fig. 2 is a cross-sectional schematic view of a resin-based composite produced using the production method of a third embodiment. The resin-based composite 20 has a structure in which a conductive layer 22 that acts as a lightning-resistant layer is formed on one surface of a first resin sheet 21, and a second resin sheet 23 is formed on the other surface.

In a similar manner to the first embodiment, the first resin sheet 21, the second resin sheet 22, and the conductive layer 23 are, respectively, a sheet formed from a glass fiber reinforced plastic (GFRP), a sheet formed from a carbon fiber reinforced plastic (CFRP), and a conductive sheet.

The resin-based composite 20 of the present embodiment is produced using the steps described below.
A GFRP prepreg that functions as the first resin sheet 21 is positioned on a conductive sheet that acts as the conductive layer 22. When a plurality of conductive sheets is used, the edges of adjacent conductive sheets are overlapped, for example across a width of approximately 5 mm. Next, a CFRP prepreg that functions as the second resin sheet 23 is positioned on the GFRP prepreg to prepare a laminate. The laminate may also be formed by sequentially laminating the GFRP prepreg and the conductive sheet on the CFRP prepreg.
The above-mentioned laminate is placed inside a vacuum bag. The laminate is then heated within a temperature range from 175°C to 185°C while the inside of the vacuum bag is evacuated, thereby bonding the prepregs and the conductive sheet to form the resin-based composite 20.

### (Fourth Embodiment)

In a fourth embodiment, the conductive layer is formed by applying a resin containing a metal powder to the first resin sheet to produce a resin-based composite of the structure illustrated in Fig. 2.

In the fourth embodiment, the resin-based composite 20 is produced using the steps described below.
Using a sprayer or coater, the resin containing the metal powder is applied to a GFRP prepreg that functions as the first resin sheet 21. Following application, heating and drying is performed in an open atmosphere to remove the solvent within the resin and harden the resin, thus forming the conductive layer 22.
Next, a CFRP prepreg that functions as the second resin sheet 23 is positioned on the surface of the first resin sheet 21 on the opposite side to the surface on which the conductive layer 22 is formed. The laminate prepared by laminating the conductive layer, the GFRP prepreg, and the CFRP prepreg is placed inside a vacuum bag. The laminate is then heated within a temperature range from 175°C to 185°C while the inside of the vacuum bag is evacuated, thereby bonding the prepregs and the conductive layer to form the resin-based composite 20.

In the first through fourth embodiments, a resin-based composite was prepared in which the first resin sheet was a GFRP and the second resin sheet was a CFRP, but the present invention is not limited to such configurations. For example, the present invention can also be applied to resin-based composites in which the first resin sheet is a CFRP and the second resin sheet is a GFRP.

### {Examples}

### (Preparation of Conductive Sheets)

A copper paint (phenolic resin) was applied by spraying to an aluminum molding sheet, the surface of which had been coated with ethylene tetrafluoride. The copper paint-coated aluminum sheet was heated under conditions of 150°C for 30 minutes. Following cooling by standing, the film of copper paint was detached from the aluminum sheet to obtain a copper-containing conductive sheet. The thickness of the copper-containing conductive sheet was within a range from 70 µm to 85 µm.

An applicator was used to apply a silver paste (urethane resin) to an aluminum molding sheet, the surface of which had been coated with ethylene tetrafluoride. The silver paste-coated aluminum sheet was heated under conditions of 80°C for 20 minutes. Following cooling by standing, the film of the silver paste was detached from the aluminum sheet to obtain a silver-containing conductive sheet. The thickness of the silver-containing conductive sheet was within a range from 100 µm to 150 µm.

### (Preparation of Resin-based Composites)

The type of lightning-resistant layer, the positioning location for the lightning-resistant layer, and the positioning method for the lightning-resistant layer are shown in Table 1.
In example 1 to example 4, and comparative example 1 and comparative example 2, a laminate was prepared by sequentially positioning, on a GFRP prepreg (manufactured by Toray Industries, Inc., ultra thin type), a conductive sheet prepared by one of the methods described above or a copper foil (electrolytic copper foil) as a lightning-resistant layer, and a CFRP prepreg (manufactured by Toray Industries, Inc., a high-strength elastic unidirectional material). In examples 2 and 4, and comparative example 2, the molding sheet-side surfaces of two conductive sheets were overlapped across a width of 5 mm.
In example 5 and example 6, a laminate was prepared by sequentially laminating a GFRP prepreg and a CFRP prepreg on the surface of the conductive sheet on the opposite side to the molding sheet.

**{Table 1}**

| | Type of lightning-resistant layer | Positioning location of lightning-resistant layer | Positioning method |
|---|---|---|---|
| Example 1 | Conductive sheet (copper) | Second layer | One layer |
| Example 2 | Conductive sheet (copper) | Second layer | Overlapped |
| Example 3 | Conductive sheet (silver) | Second layer | One layer |
| Example 4 | Conductive sheet (silver) | Second layer | Overlapped |
| Example 5 | Conductive sheet (copper) | First layer | One layer |
| Example 6 | Conductive sheet (silver) | First layer | One layer |
| Comparative example 1 | Copper foil | Second layer | One layer |
| Comparative example 2 | Copper foil | Second layer | Overlapped |

The laminates were each placed in a vacuum bag, and thermal bonding was performed while the bag was evacuated to obtain a resin-based composite. The bonding conditions included: vacuum degree: 3.4 × 10³ Pa, pressure: 5.9 × 10⁵ Pa, heating temperature: 180°C, and heating time: 2 hours.

### (Adhesion Evaluation)

A cross-section of each resin-based composite of the examples and comparative examples was inspected using a digital macroscope and a metallurgical microscope. In the resin-based composites of examples 1 and 2, the adhesion between the conductive sheet and the GFRP, and the adhesion between the conductive sheet and the CFRP were good. In the resin-based composites of examples 3 and 4, the adhesion between the conductive sheet and the CFRP was good. In particular, in example 4, none of the FRP resin components penetrated into the overlapped portions of the conductive sheets, indicating that the adhesion between the conductive sheets was good. In the resin-based composites of examples 5 and 6, the adhesion between the conductive sheet and the GFRP was good. In the composites of comparative examples 1 and 2, the adhesion between the copper foil and the GFRP, and the adhesion between the copper foil and the CFRP were good. However, in the composite of comparative example 2, a gap existed between the copper foils, confirming that the adhesion between the copper foils was poor.

A cut was made with a cutter in each of the resin-based composites of the examples and comparative examples, and the existence of detachment at the interface was investigated. In the resin-based composites of example 1 to example 6, no detachment occurred at the GFRP/conductive sheet interface or the CFRP/conductive sheet interface. In the resin-based composites of comparative example 1 and comparative example 2, detachment occurred at the CFRP/copper foil interface.

### (Workability Evaluation)

Each of the resin-based composites of the examples and comparative examples was cut using a diamond cutter, and the cross-section was inspected using a digital microscope. In all of the resin-based composites of the examples, no burrs were generated. In the resin-based composites of the comparative examples, it was confirmed that burrs had been generated from the copper foil.

### (Measurement of resistance values)

The surface resistance at the outer surface and the molding sheet-side surface of the conductive sheets prepared using the above-mentioned methods, and the surface resistance (at the upper and lower surfaces) of the above copper foil were measured. The distance between the terminals was set to 100 mm.

In the case of the resin-based composites of example 1, example 3 and comparative example 1, the GFRP was removed to expose the conductive sheet or the copper foil around two points that resulted in a distance between the terminals of 100 mm. In example 2, example 4 and comparative example 2, the GFRP was removed around points positioned 50 mm to either side of the center of the overlapping portion between the two conductive sheets or copper foils. In example 5 and example 6, the conductive sheet surface was polished to remove the oxide film around two points that resulted in a distance between the terminals of 100 mm.
The surface resistance (distance between terminals: 100 mm) of the conductive sheet or copper foil of each resin-based composite of the examples and comparative examples was measured. The conductive sheet, copper foil, and surface resistance for each of the examples and comparative examples are shown in Table 2.

**{Table 2}**

| | | Resistance value (mΩ) |
|---|---|---|
| Conductive sheet (copper) | Outer surface | 800 |
| | Molding sheet-side surface | 40 |
| Conductive sheet (silver) | Outer surface | 20 |
| | Molding sheet-side surface | 20 |
| Copper foil | | 0.8 |
| | | 0.3 |
| Example 1 | | 80 |
| Example 2 | | 800 |
| Example 3 | | 40 |
| Example 4 | | 40 |
| Example 5 | | 100 |
| Example 6 | | 40 |
| Comparative example 1 | | 3 |
| Comparative example 2 | | 4 |

The outer surface side of the copper-containing conductive sheet oxidizes during drying, and therefore the surface resistance was larger than that of the molding sheet side. Although the surface resistance of the copper-containing conductive sheet was larger than the surface resistance of the copper foil, the value was satisfactory for use as a lightning-resistant layer of an aircraft main wing structure.
The silver-containing conductive sheet had substantially the same resistance value at the outer surface side and the molding sheet side. When heating under conditions of 150°C was performed following preparation of the silver-containing conductive sheet, both of the resistance values became 8 mΩ.

The surface resistance values of the examples were larger than the surface resistance values of the examples, but were satisfactory for use as a lightning-resistant layer of an aircraft main wing structure.

### {Reference Signs List}

- 10, 20: Resin-based composite
- 11, 21: First resin sheet
- 12, 22: Conductive layer (lightning-resistant layer)
- 13, 23: Second resin sheet

## Claims

1. A method for producing a resin-based composite, the method comprising:
a step of forming a laminate by sequentially laminating, on a first resin sheet comprising mainly a fiber-reinforced resin, a conductive layer formed from a resin containing a metal powder, and a second resin sheet comprising mainly a fiber-reinforced resin, and
a step of forming a resin-based composite by baking the laminate to bond the first resin sheet, the conductive layer and the second resin sheet.

2. A method for producing a resin-based composite, the method comprising:
a step of forming a laminate by laminating a conductive layer formed from a resin containing a metal powder to one surface of a first resin sheet comprising mainly a fiber-reinforced resin, and laminating a second resin sheet comprising mainly a fiber-reinforced resin to a surface on an opposite side to the surface on which the conductive layer is formed, and
a step of forming a resin-based composite by baking the laminate to bond the first resin sheet, the conductive layer and the second resin sheet.

3. A method for producing a resin-based composite according to Claim 1 or Claim 2, wherein the metal powder is a copper powder or a silver powder.
